# EUROPÄISCHE PATENTANMELDUNG

(11) **EP 3 255 369 A1**
(43) Veröffentlichungstag der Anmeldung: **13.12.2017**
(21) Anmeldenummer: 17172044.4
(22) Anmeldetag: 19.05.2017
(51) Int. Cl.: F28F 1/12, F28D 1/053

(54) **RIPPENELEMENT FÜR EINEN WÄRMEÜBERTRAGER**

(30) Priorität: 08.06.2016 DE 102016210159
(71) Anmelder: Mahle International GmbH, 70376 Stuttgart (DE)
(72) Erfinder: Dettling, Elke, 71679 Asperg (DE); Kohl, Michael, 74321 Bietigheim-Bissingen (DE); Krumbach, Karl-Gerd, 71576 Burgstetten (DE); Seewald, Wolfgang, 71732 Tamm (DE); Kälber, Johannes, 75417 Mühlacker (DE)
(74) Vertreter: Grauel, Andreas

(57) **Zusammenfassung**

Die Erfindung betrifft ein Rippenelement(1, 101, 201) für einen Wärmeübertrager, insbesondere für eine Heizungs-, Lüftungs- und/oder Klimaanlage eines Kraftfahrzeugs, mit einer Vielzahl von Verbindungsabschnitten (7,107, 207) und von Längsabschnitten (4, 21, 104, 121, 204, 221, 321, 421, 521, 621, 721, 821, 921), wobei jeweils zwei benachbarte Längsabschnitte (4, 21, 104, 121, 204, 221, 321, 421, 521, 621, 721, 821, 921) durch einen Verbindungsabschnitt (7, 107, 207) miteinander verbunden sind, wobei zumindest einer der Längsabschnitte (4, 21, 104, 121, 204, 221, 321, 421, 521, 621, 721, 821, 921) aus Stegen (9, 109, 209) und Schlitzen (10, 110, 210) ausgebildete Kiemen (3, 103, 203) aufweist, wobei zumindest einer der Stege (9, 109, 209) eine ausgestellte Stegfläche (11, 111, 211) aufweist, wobei die Stegfläche (11, 111, 211) aus dem zumindest einem Längsabschnitt (4, 104, 204) ausgestellt ist, wobei die Stegfläche (11, 111, 211) zumindest zwei zueinander abgewinkelt angeordnete Flächenabschnitte (12, 13, 112, 113, 212, 213) bildet.

## Beschreibung

### Technisches Gebiet

Die Erfindung betrifft ein Rippenelement für einen Wärmeübertrager, insbesondere nach dem Oberbegriff von Anspruch 1, und einen mit einem derartigen Rippenelements ausgebildeten Wärmeübertrager.

### Stand der Technik

Die DE 10 2009 021 179 A1 offenbart ein Rippenelement für einen Wärmeübertrager, umfassend ein in einer Längsrichtung gewelltes, zwischen zwei Strukturen angeordnetes Rippenblech, wobei das Rippenblech in einer Tiefenrichtung von einem gasförmigen Fluid zur Übertragung von Wärme zwischen den Strukturen und dem Fluid durchströmbar ist und wobei in dem Rippenblech eine Mehrzahl von parallel hintereinander angeordneten, sich quer zu der Tiefenrichtung erstreckenden Kiemen mit einer Kiementiefe und einem Kiemenwinkel bezüglich der Tiefenrichtung vorgesehen sind, wobei der Kiemenwinkel zwischen 14° und 26° beträgt, wobei die Kiementiefe entweder im Bereich von 0,3 mm bis 0,6 mm oder im Bereich von 1,1 mm bis 1,8 mm liegt.

Die DE 10 2013 108 357 A1 offenbart ein Lamellenelement, das Lamellen aufweist, die einstückig über Verbindungsabschnitte miteinander verbunden sind. Zur Erhöhung einer Steifigkeit wird das Lamellenelement von seinen Verbindungsabschnitten her etwa in Richtung der Lamellen mit einer Presskraft bei der Herstellung beaufschlagt, womit zumindest die Verbindungsabschnitte plastisch verformt werden. Zusätzlich oder alternativ sind in einigen oder allen Lamellen Sicken eingebracht.

Die EP 2 125 404 B1 offenbart eine Luftstromerwärmungsvorrichtung für eine Heizungs- oder Klimaanlage eines Fahrzeugs, umfassend ein Heizelement, das in einem Luftströmungsbereich angeordnet ist und ein elektrisch leitfähiges Vlies umfasst. Die EP 2 125 404 B1 offenbart darüber hinaus eine Zusatzheizeinrichtung und eine Fahrzeugheizungsanlage oder -klimaanlage, die die Luftstromerwärmungsvorrichtung umfasst.

Die EP 2 049 860 B1 offenbart eine Wellrippe mit Wellenbergen bzw. Wellentälern und sich daran anschließenden, eine Biegekante aufweisenden senkrechten oder leicht geneigten Wellenflanken, die jeweils zwischen zwei Flachrohren in einem Wärmetauscher angeordnet sind, wobei die Wellenflanken mit aus deren Ebenen herausgestellten Schnitten ausgestattet sind, wobei die Biegekanten derart geschwächt ausgebildet sind, dass die bei der Biegung sich einstellende Rückfederung reduziert ist.

Die DE 10 2012 109 768 A1 offenbart ein Radiatorelement für einen Luftheizer, eine Heizstufe eines derartigen Luftheizers und ein Verfahren zum Herstellen eines Radiatorelementes, bei denen ein Wellrippenelement direkt durch Einschrauben eines Kontaktkörpers elektrisch kontaktiert ist.

### Darstellun der Erfindun Aufgabe, Lösung, Vorteile

Es ist die Aufgabe der Erfindung, ein Rippenelement für einen Wärmeübertrager zu schaffen, welches eine gute Wärmeübertragung bei geringem Druckabfall und bei gleichzeitig hoher Stabilität ermöglicht. Darüber hinaus ist es die Aufgabe der Erfindung, einen Wärmeübertrager bereitzustellen, der hinsichtlich einer guten Wärmeübertragung bei geringem Druckabfall und bei gleichzeitig hoher Stabilität verbessert ist.

Die Aufgabe zum Rippenelement wird mit den Merkmalen von Anspruch 1 gelöst.

Ein Ausführungsbeispiel der Erfindung betrifft ein Rippenelement für einen Wärmeübertrager, insbesondere für eine Heizungs-, Lüftungs- und/oder Klimaanlage eines Kraftfahrzeugs, mit einer Vielzahl von Verbindungsabschnitten und von Längsabschnitten, wobei jeweils zwei benachbarte Längsabschnitte durch einen Verbindungsabschnitt miteinander verbunden sind, wobei zumindest einer der Längsabschnitte aus Stegen und Schlitzen ausgebildete Kiemen aufweist, wobei zumindest einer der Stege eine ausgestellte Stegfläche aufweist, wobei die Stegfläche aus dem zumindest einem Längsabschnitt ausgestellt ist, dadurch gekennzeichnet, dass die Stegfläche zumindest zwei zueinander abgewinkelt angeordnete Flächenabschnitte bildet. Eine solche Ausführungsweise ermöglicht einen besonders guten Wärmeübergang und stellt darüber hinaus eine ausgesprochen stabile Konstruktionsform dar. Die genannte Bauform vereint darüber hinaus in optimaler Weise die erforderliche Stabilität mit einem möglichst geringen Druckverlust bei der Durchströmung des Wärmeübertragers mit einem zu erwärmenden Luftstrom. Die Kiemen erlauben dabei die Verteilung von Teilluftströmen quer zur Strömungsrichtung eines Hauptluftstroms und verbessern die Wärmeübertragung.

In einer besonders vorteilhaften Ausführungsform weist eine Vielzahl der Stege oder jeder der Stege jeweils eine aus dem zumindest einem Längsabschnitt ausgestellte Stegfläche auf, welche zumindest zwei zueinander abgewinkelt angeordnete Flächenabschnitte bildet.

Darüber hinaus weisen vorzugsweise eine Vielzahl oder alle der Längsabschnitte ausgestellte Stegflächen mit zumindest zwei zueinander abgewinkelt angeordneten Flächenabschnitten auf.

Vorteilhafterweise sind zwischen den Verbindungsabschnitten und den Längsabschnitten Strömungsräume ausgebildet, welche in einer Tiefenrichtung T, insbesondere mit Luft, durchströmbar sind, wobei die von den jeweiligen Stegflächen gebildeten Flächenabschnitte die Tiefenrichtung T in einem Winkel β schneiden. Die Stabilität des Rippenelements wird durch diese Bauweise noch weiter verbessert.

Zusätzlich können die Stege ein V-förmiges, W-förmiges, Z-förmiges, hakenförmiges und/oder I-förmiges Querschnittsprofil und/oder Stegabschnitte mit einem V-förmigen, W-förmigen, Z-förmigen, hakenförmigen und/oder I-förmigen Querschnittsprofil aufweisen, wobei die Stege mit einem V-förmigen, W-förmigen, Z-förmigen, hakenförmigen und/oder I-förmigen Querschnittsprofil und/oder die Stegabschnitte mit einem V-förmigen, W-förmigen, Z-förmigen, hakenförmigen und/oder I-förmigen Querschnittsprofil aus einer ersten Seite des zumindest einen Verbindungsabschnitts und/oder aus einer der ersten Seite gegenüberliegenden zweiten Seite des zumindest einen Verbindungsabschnitts ausgestellt sind. Hierdurch wird die Stabilität des Rippenelements, insbesondere im Bereich der Kiemen, erhöht. Darüber hinaus werden die Wärmeübertragung sowie auch das Geschwindigkeitsprofil der durch die Kiemen strömenden Luft optimiert.

Darüber hinaus können eine Anzahl benachbart zueinander angeordnete Stege zumindest eine Gruppe bilden, wobei die zumindest eine Gruppe ein für die zumindest eine Gruppe spezifisches Anordnungsmuster aus einer Reihenfolge von Stegen mit jeweils einem V-förmigen, W-förmigen, Z-förmigen, hakenförmigen und/oder I-förmigen Querschnittsprofil und/oder Stegabschnitten mit jeweils einem V-förmigen, W-förmigen, Z-förmigen, hakenförmigen und/oder I-förmigen Querschnittsprofil aufweist.

Eine weitere Ausführungsweise sieht vor, dass der zumindest eine Verbindungsabschnitt eine Mehrzahl an Gruppen aufweist, welche jeweils ein für die jeweilige Gruppe spezifisches Anordnungsmuster aus einer Reihenfolge von Stegen mit jeweils einem V-förmigen, W-förmigen, Z-förmigen, hakenförmigen und/oder I-förmigen Querschnittsprofil und/oder Stegabschnitte mit jeweils einem V-förmigen, W-förmigen, Z-förmigen, hakenförmigen und/oder I-förmigen Querschnittsprofil aufweisen. Mittels dieser Ausführungsformen lassen sich die Wärmeaustauschflächen sowie auch die für eine Verbindung mit Wärmeübertragungselementen zur Verfügung stehenden Verbindungsflächen dem jeweiligen Bedarf anpassen.

Außerdem kann der zumindest eine Verbindungsabschnitt zumindest eine sich periodisch entlang des zumindest einen Verbindungsabschnitts wiederholende Gruppe von Stegflächen aufweisen.

Ein besonders vorteilhaftes Ausführungsbeispiel sieht vor, dass die zumindest eine Gruppe von Stegflächen zumindest eine quer zur Tiefenrichtung T und im Wesentlichen parallel zu den Stegflächen angeordnete Spiegelachse aufweist, derart, dass die zumindest eine Gruppe von Stegflächen zumindest zwei zueinander spiegelsymmetrisch ausgebildete Abschnitte von Stegflächen aufweist. Dadurch wird eine hohe Effizienz für ein aus Wärmeübertragungselementen und Rippenelementen aufgebautes Wärmeübertragungsnetz erreicht.

Eine weitere Ausführungsvariante sieht vor, dass die Längsabschnitte und die Verbindungsabschnitte ein U-förmiges-, V-förmiges, rechteckförmiges, trapezförmiges und/oder Ω-förmiges Querschnittsprofil ausbilden.

Darüber hinaus können die Verbindungsabschnitte stoff-, reib- und/oder formschlüssig mit Wärmeübertragungsflächen des Wärmeübertragers verbunden sein, derart, dass das Rippenelement die Wärmeübertragungsflächen des Wärmeübertragers vergrößert. Dies führt zu einer optimalen Wärmeleitung zwischen den Wärmeübertragungselementen und den Rippen des Rippenelements.

Die Aufgabe zum Wärmeübertrager wird mit den Merkmalen des Anspruchs 12 gelöst.

Ein Ausführungsbeispiel des Wärmeübertragers sieht vor, dass der Wärmeübertrager zumindest ein Rippenelements für einen Wärmeübertrager gemäß der oben genannten Beschreibung aufweist.

Der Wärmeübertrager weist dabei vorzugsweise zumindest zwei Wärmeübertragungselemente auf, wobei zwischen den beiden Wärmeübertragungselementen ein gemäß der oben genannten Beschreibung ausgebildetes Rippenelement angeordnet ist.

Dabei kann es sich bei dem Wärmeübertrager beispielsweise um eine elektrische Heizvorrichtung handeln. In einer solchen ist die Anwendung des erfindungsgemäßen Rippenelements besonders effektiv.

Vorteilhafterweise weist die elektrische Heizvorrichtung PTC-Heizelemente auf, wobei die Rippenelemente und die PTC-Heizelemente benachbart zueinander angeordnet sind.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage mehrerer Ausführungsbeispiele anhand der Figuren der Zeichnungen näher erläutert. Es zeigen:
- Fig. 1: eine perspektivische Ansicht eines erfindungsgemäßen Rippenelements,
- Fig. 2: eine Schnittansicht eines Details eines Rippenelements gemäß Figur 1,
- Fig. 3: eine perspektivische Ansicht eines weiteren Ausführungsbeispiels eines Rippenelements,
- Fig. 4: eine Schnittansicht eines Details eines Rippenelements gemäß Figur 3,
- Fig. 5: eine perspektivische Ansicht eines weiteren Ausführungsbeispiels eines Rippenelements,
- Fig. 6: eine Schnittansicht eines Details eines Rippenelements gemäß Figur 5,
- Fig. 7: eine perspektivische Ansicht eines Details eines Rippenelements gemäß den Figuren 1 und 2,
- Fig. 8: eine perspektivische Ansicht eines Details eines Rippenelements gemäß den Figuren 3 und 4,
- Fig. 9: eine perspektivische Ansicht eines Details eines Rippenelements gemäß den Figuren 5 und 6,
- Fig. 10: eine Schnittansicht einer Ausführungsform eines Details eines Rippenelements gemäß den Figuren 1 bis 6,
- Fig. 11: eine Schnittansicht einer Ausführungsform eines Details eines Rippenelements gemäß den Figuren 1 bis 6,
- Fig. 12.: eine Schnittansicht einer Ausführungsform eines Details eines Rippenelements gemäß den Figuren 1 bis 6,
- Fig. 13: eine Schnittansicht einer Ausführungsform eines Details eines Rippenelements gemäß den Figuren 1 bis 6,
- Fig. 14: eine Schnittansicht einer Ausführungsform eines Details eines Rippenelements gemäß den Figuren 1 bis 6,
- Fig. 15: eine Schnittansicht einer Ausführungsform eines Details eines Rippenelements gemäß den Figuren 1 bis 6,
- Fig. 16: eine Schnittansicht einer Ausführungsform eines Details eines Rippenelements gemäß den Figuren 1 bis 6,
- Fig. 17: eine Schnittansicht einer Ausführungsform eines Details eines Rippenelements gemäß den Figuren 1 bis 6,
- Fig. 18: eine Schnittansicht einer Ausführungsform eines Details eines Rippenelements gemäß den Figuren 1 bis 6,
- Fig. 19: eine Schnittansicht einer Ausführungsform eines Details eines Rippenelements gemäß den Figuren 1 bis 6,
- Fig. 20: eine Schnittansicht eines Details eines Rippenelements gemäß den Figuren 5, 6 und 9, und
- Fig. 21: eine Darstellung der Verteilung der Luftgeschwindigkeit an einem Detail eines erfindungsgemäßen Rippenelements.

### Bevorzugte Ausführung der Erfindung

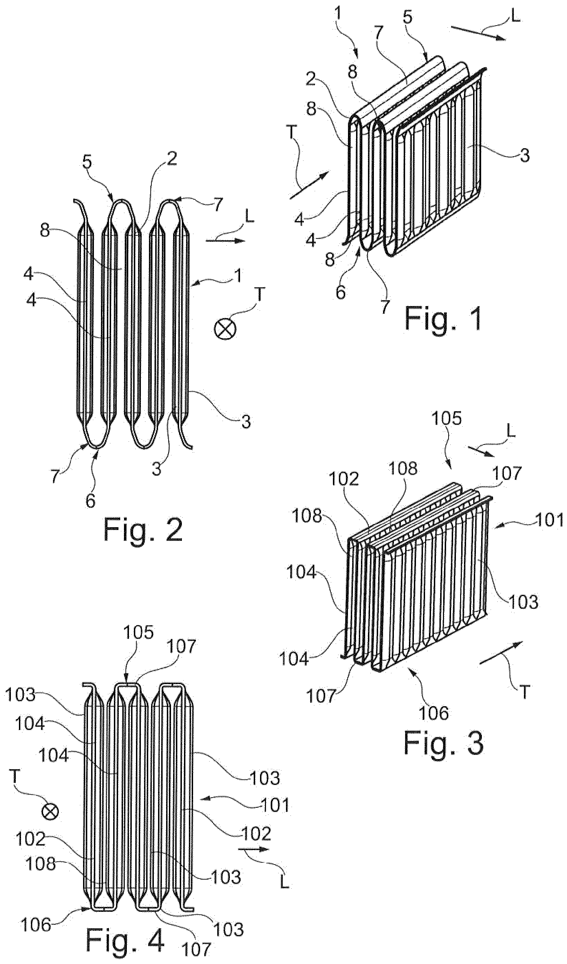

Figur 1 zeigt ein erstes Ausführungsbeispiel eines erfindungsgemäßen Rippenelements 1 für einen nicht näher dargestellten Wärmeübertrager. Dabei zeigt Figur 1 einen repräsentativen Ausschnitt des Rippenelements 1, welches sich in der Längsrichtung L, je nach den jeweiligen Anforderungen, in einer beliebigen Länge erstrecken kann.

Bei dem Wärmeübertrager kann es sich beispielsweise um einen Heizkörper für ein Kraftfahrzeug handeln. Auch kann es sich um einen Kühlmittelkühler oder einen anderen Wärmeübertrager handeln. Rippenelemente 1 sind dabei zwischen, in Figur 1 nicht dargestellten Wärmeübertragungselementen angeordnet, bei denen es sich beispielsweise um elektrische Heizelemente oder auch um von einem erhitzten Kühlmittel durchströmte Rohre handeln kann. Gemeinsam mit diesen Wärmeübertragungselementen bilden mehrere Rippenelemente 1 einen Wärmeübertragerblock, welcher üblicherweise zur Erwärmung eines Luftstroms verwendet wird. Dabei durchströmt der Luftstrom den Wärmeübertragerblock in einer Tiefenrichtung T, welche in Richtung einer Tiefe des Wärmeübertragers senkrecht zur Längsrichtung L verläuft. Die Wärmeübertragungselemente, deren Wärmeübertragungsflächen mittels der Rippenelemente 1 vergrößert werden, erwärmen den Luftstrom. Dieser kann anschließend insbesondere zur energieeffizienten Beheizung einer Fahrzeugkabine genutzt werden.

Das Rippenelement 1 ist in dem in Figur 1 dargestellten Ausführungsbeispiel als Wellrippe mit Rippen 2 und Kiemen 3 aus einem in der Längsrichtung L gewellten Endlosblech ausgebildet. Die Rippen 2 und Kiemen 3 sind hierbei einteilig mittels eines Stanz-, Roll- und/oder Falzverfahrens ausgebildet. Dabei weisen die Rippen 2 des Rippenelements 1 Längsabschnitte 4 auf, an denen die Kiemen 3 angeordnet sind. Die Längsabschnitte 4 der Rippen 2 des Rippenelements 1 können jeweils eine Mehrzahl an Kiemen 3 aufweisen. Alternativ können einige der Längsabschnitte 4 keine Kiemen 3 aufweisen.

Die Rippen 2 sind in der Längsrichtung L des Rippenelements 1 aneinandergereiht angeordnet. Dabei weist das Rippenelement 1 eine erste Längsseite 5 und eine der ersten Längsseite 5 gegenüberliegende zweite Längsseite 6 auf. Die Längsabschnitte 4 verlaufen von der ersten Längsseite 5 zur zweiten Längsseite 6 bzw. von der zweiten Längsseite 6 zur ersten Längsseite 5. Im Bereich der Längsseiten 5, 6 des Rippenelements 1 weisen die Rippen 2 Verbindungsabschnitte 7 auf, welche die beiden Längsabschnitte 4 einer Rippe 2 miteinander verbinden und darüber hinaus Verbindungsflächen zur Verbindung des Rippenelements 1 mit den Wärmeübertragungselementen ausbilden. Über die von den Verbindungsabschnitten 7 ausgebildeten Verbindungsflächen kann Wärme von den Wärmeübertragungselementen auf die Rippen 2 des Rippenelements 1 und von dort auf den Luftstrom übertragen werden.

Die Rippen 2 bilden zwischen ihren Längsabschnitten 4 und Verbindungsabschnitten 7 Strömungsräume 8 aus, die von dem Luftstrom, insbesondere in der Tiefenrichtung T, durchströmt werden. Darüber hinaus strömen Teilluftströme des Luftstroms durch die Kiemen 3 aus den Strömungsräumen 8 in die jeweils benachbarten Strömungsräume 8. Dadurch kommt es, neben der Durchströmung der Strömungsräume 8 in der Tiefenrichtung T, auch zu einer im Wesentlichen quer zur Tiefenrichtung T verlaufenden Durchströmung der Strömungsräume 8. Die Strömungsräume 8 werden in dem in Figur 1 gezeigten Ausführungsbeispiel, außer durch die Längsabschnitte 4, auch durch die Verbindungsabschnitte 7 begrenzt. Dabei weisen die Strömungsräume 8 entlang der Längsrichtung L des Rippenelements 1 geschnitten ein länglich gestrecktes Querschnittsprofil auf, wobei die Verbindungsabschnitte 7 jeweils U-förmig ausgebildet sind.

Die endständigen Längsabschnitte 4 der in Figur 1 nicht gezeigten endständigen Rippen 2 des Rippenelements 1 sind über einen der Verbindungsabschnitte 7 im Bereich der ersten Längsseite 5 oder der zweiten Längsseite 6 jeweils mit einem weiteren Längsabschnitt 4 verbunden. Die übrigen, nicht endständigen Längsabschnitte 4 sind über Verbindungsabschnitte 7 jeweils mit zwei weiteren Längsabschnitten 4 über Verbindungsabschnitte 7 im Bereich der ersten Längsseite 5 oder der zweiten Längsseite 6 verbunden.

Figur 2 zeigt eine Schnittdarstellung des in Figur 1 gezeigten Rippenelements 1, wobei die Schnittführung in der Längsrichtung L des Rippenelements 1 erfolgt. Das Rippenelement 1 weist in der Längsrichtung L des Rippenelements 1 aneinandergereiht angeordnete Rippen 2 auf, wobei die zwischen den Längsabschnitten 4 und den Verbindungsabschnitten 7 ausgebildeten Strömungsräume 8 in der senkrecht zur Längsrichtung L des Rippenelements 1 angeordneten Tiefenrichtung T von einem Luftstrom durchströmbar sind.

Das Rippenelement 1 weist eine erste Längsseite 5 und eine der ersten Längsseite 5 gegenüberliegende zweite Längsseite 6 auf. Die Längsabschnitte 4 der Rippen 2 sind von der ersten Längsseite 5 zur zweiten Längsseite 6 bzw. von der zweiten Längsseite 6 zur ersten Längsseite 5 verlaufend angeordnet. Die Verbindungsabschnitte 7 verbinden jeweils zwei benachbarte Längsabschnitte 4 und sind jeweils im Bereich der ersten Längsseite 5 oder der zweiten Längsseite 6 angeordnet. Die Verbindungsabschnitte 7 können reib-, form- und/oder stoffschlüssig mit den Wärmeübertragungselementen verbunden sein. Vorzugsweise kommen hierfür Klebe- oder Lötverfahren zum Einsatz. In dem in Figur 2 gezeigten Ausführungsbeispiel sind die Verbindungsabschnitte 7 U-förmig gewölbt ausgebildet, derart, dass sie zu den Strömungsräumen 8 hin konkav gewölbt sind und zu den Wärmeübertragungselementen hin konvex gewölbt sind.

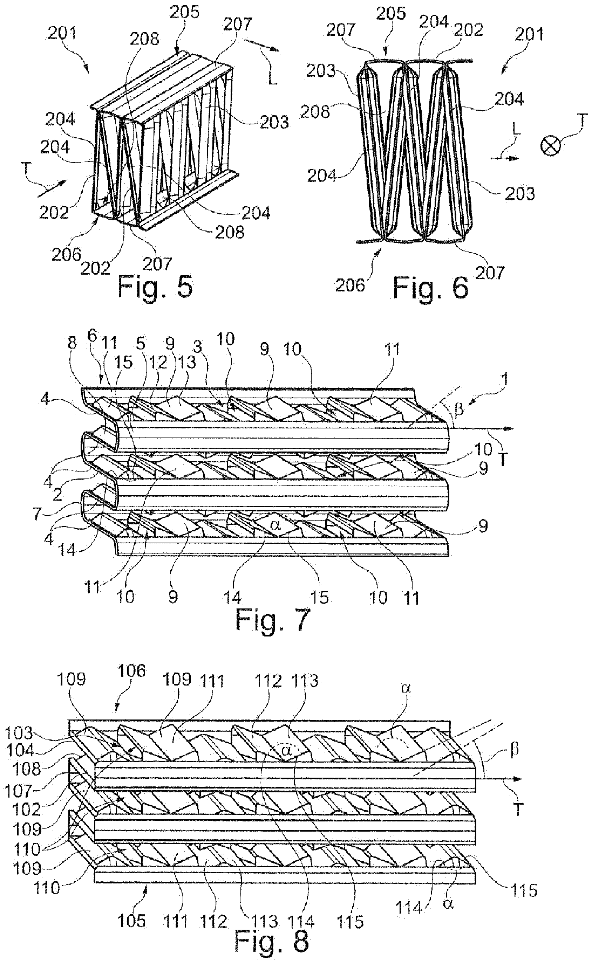

Die Längsabschnitte 4 weisen Kiemen 3 auf, welche aneinandergereiht entlang der Längsabschnitte 4 angeordnet sind. Auf beispielhafte Ausführungsformen der Kiemen 3 wird in den Figuren 7 bis 9 näher eingegangen.

Figur 3 zeigt ein weiteres Ausführungsbeispiel eines erfindungsgemäßen Rippenelements 101 für einen nicht näher dargestellten Wärmeübertrager. Dabei zeigt Figur 3 einen repräsentativen Ausschnitt des Rippenelements 101, welches sich in der Längsrichtung L, je nach den jeweiligen Anforderungen, in einer beliebigen Länge erstrecken kann.

Bei dem Wärmeübertrager kann es sich beispielsweise um einen Heizkörper für ein Kraftfahrzeug handeln. Rippenelemente 101 sind dabei zwischen in Figur 3 nicht dargestellten Wärmeübertragungselementen angeordnet, bei denen es sich beispielsweise um elektrische Heizelemente oder auch um von einem erhitzten Kühlmittel durchströmte Rohre handeln kann. Gemeinsam mit diesen Wärmeübertragungselementen bilden mehrere Rippenelemente 101 einen Wärmeübertragerblock, welcher üblicherweise zur Erwärmung eines Luftstroms verwendet wird. Dabei durchströmt der Luftstrom den Wärmeübertragerblock in einer Tiefenrichtung T, welche in Richtung einer Tiefe des Wärmeübertragerblocks senkrecht zur Längsrichtung L verläuft. Die Wärmeübertragungselemente, deren Wärmeübertragungsflächen mittels der Rippenelemente 101 vergrößert werden, erwärmen den Luftstrom. Dieser kann anschließend insbesondere zur energieeffizienten Beheizung einer Fahrzeugkabine genutzt werden.

Das Rippenelement 101 ist in dem in Figur 3 dargestellten Ausführungsbeispiel als Wellrippe mit Rippen 102 und Kiemen 103 aus einem in der Längsrichtung L gewellten Endlosblech ausgebildet. Die Rippen 102 und Kiemen 103 sind hierbei einteilig mittels eines Stanz-, Roll und/oder Falzverfahrens ausgebildet. Dabei weisen die Rippen 102 des Rippenelements 101 Längsabschnitte 104 auf, an denen die Kiemen 103 angeordnet sind. Die Längsabschnitte 104 der Rippen 102 können jeweils eine Mehrzahl an Kiemen 103 aufweisen. Alternativ können einige der Längsabschnitte 104 auch keine Kiemen 103 aufweisen.

Die Rippen 102 sind in der Längsrichtung L des Rippenelements 101 aneinandergereiht angeordnet. Dabei weist das Rippenelement 102 eine erste Längsseite 105 und eine der ersten Längsseite 105 gegenüberliegende zweite Längsseite 106 auf. Die Längsabschnitte 104 verlaufen von der ersten Längsseite 105 zur zweiten Längsseite 106 bzw. von der zweiten Längsseite 106 zur ersten Längsseite 105. Im Bereich der Längsseiten 105, 106 weisen die Rippen 102 des Rippenelements 101 Verbindungsabschnitte 107 auf, welche jeweils die zwei Längsabschnitte 104 einer Rippe 102 miteinander verbinden und darüber hinaus Verbindungsflächen zur Verbindung der Rippen 102 des Rippenelements 101 mit den Wärmeübertragungselementen ausbilden. Über die von den Verbindungsabschnitten 107 ausgebildeten Verbindungsflächen kann Wärme von den Wärmeübertragungselementen auf die Längsabschnitte 104 der Rippen 102 sowie von diesen auf den Luftstrom übertragen werden. Die Verbindungsabschnitte 107 sind in dem in Figur 3 gezeigten Ausführungsbeispiel im Wesentlichen senkrecht zu den Längsabschnitten 104 angeordnet.

Die Rippen 102 des Rippenelements 101 bilden zwischen ihren Längsabschnitten 104 und Verbindungsabschnitten 107 Strömungsräume 108 aus, die von dem Luftstrom insbesondere in der Tiefenrichtung T durchströmt werden. Darüber hinaus strömen Teilluftströme des Luftstroms durch die Kiemen 103 aus den Strömungsräumen 108 in die jeweils benachbarten Strömungsräume 108. Dadurch kommt es neben der Durchströmung der Strömungsräume 108 in der Tiefenrichtung T auch zu einer im Wesentlichen quer zur Tiefenrichtung T verlaufenden Durchströmung der Strömungsräume 108 durch die Teilluftströme. Die Strömungsräume 108 werden in dem in Figur 3 gezeigten Ausführungsbeispiel, außer durch die Längsabschnitte 104, auch durch die Verbindungsabschnitte 107 begrenzt. Dabei weisen die Strömungsräume 108 entlang der Längsrichtung L des Rippenelements 101 geschnitten ein länglich gestrecktes rechteckförmiges Querschnittsprofil auf.

Figur 4 zeigt eine Schnittdarstellung des in Figur 3 gezeigten Rippenelements 101, wobei die Schnittführung in der Längsrichtung L des Rippenelements 101 erfolgt. Das Rippenelement 101 weist in der Längsrichtung L des Rippenelements 101 aneinandergereiht angeordnete Rippen 102 auf, wobei die zwischen den Längsabschnitten 104 und den Verbindungsabschnitten 107 der Rippen 102 des Rippenelements 101 ausgebildeten Strömungsräume 108 in der senkrecht zur Längsrichtung L des Rippenelements 101 angeordneten Tiefenrichtung T von einem Luftstrom durchströmbar sind.

Das Rippenelement 101 weist eine erste Längsseite 105 und eine der ersten Längsseite 105 gegenüberliegende zweite Längsseite 106 auf. Die Längsabschnitte 104 der Rippen 102 sind von der ersten Längsseite 105 zur zweiten Längsseite 106 bzw. von der zweiten Längsseite 106 zur ersten Längsseite 105 verlaufend angeordnet. Die Verbindungsabschnitte 107 verbinden jeweils zwei benachbarte Längsabschnitte 104 und sind jeweils im Bereich der ersten Längsseite 105 oder der zweiten Längsseite 106 angeordnet. Die Verbindungsabschnitte 107 können reib-, form- und/oder stoffschlüssig mit den Wärmeübertragungselementen verbunden sein. Vorzugsweise kommen hierfür Klebe- oder Lötverfahren zum Einsatz. In dem in Figur 4 gezeigten Ausführungsbeispiel sind die Verbindungsabschnitte 107 senkrecht zu den Längsabschnitten 104 angeordnet, derart, dass sie eine vergleichsweise große Verbindungsfläche zur Verbindung des Rippenelements 101 mit den Wärmeübertragungselementen ausbilden. Die Längsabschnitte 104 weisen die Kiemen 103 auf, welche aneinandergereiht entlang der Längsabschnitte 104 angeordnet sind. Auf beispielhafte Ausführungsformen der Kiemen 103 wird in den Figuren 7 bis 9 näher eingegangen.

Figur 5 zeigt ein weiteres Ausführungsbeispiel eines erfindungsgemäßen Rippenelements 201 für einen nicht näher dargestellten Wärmeübertrager. Dabei zeigt Figur 5 einen repräsentativen Ausschnitt des Rippenelements 201, welches sich in der Längsrichtung L, je nach den jeweiligen Anforderungen, in einer beliebigen Länge erstrecken kann.

Bei dem Wärmeübertrager kann es sich beispielsweise um einen Heizkörper für ein Kraftfahrzeug handeln. Rippenelemente 201 sind dabei zwischen in Figur 5 nicht dargestellten Wärmeübertragungselementen angeordnet, bei denen es sich beispielsweise um elektrische Heizelemente oder auch um von einem erhitzten Kühlmittel durchströmte Rohre handeln kann. Gemeinsam mit diesen Wärmeübertragungselementen bilden mehrere Rippenelemente 201 einen Wärmeübertragerblock, welcher üblicherweise zur Erwärmung eines Luftstroms verwendet wird. Dabei durchströmt der Luftstrom den Wärmeübertragerblock in einer Tiefenrichtung T, welche in Richtung einer Tiefe des Wärmeübertragers senkrecht zur Längsrichtung L verläuft. Die Wärmeübertragungselemente, deren Wärmeübertragungsflächen mittels der Rippenelemente 201 vergrößert werden, erwärmen den Luftstrom. Dieser kann anschließend insbesondere zur energieeffizienten Beheizung einer Fahrzeugkabine genutzt werden.

Das Rippenelements 201 ist in dem in Figur 5 dargestellten Ausführungsbeispiel als Wellrippe mit Rippen 202 und Kiemen 203 aus einem in der Längsrichtung L gewellten Endlosblech ausgebildet. Die Rippen 202 und Kiemen 203 sind hierbei einteilig mittels eines Stanz-, Roll- und/oder Falzverfahrens ausgebildet. Dabei weisen die Rippen 202 des Rippenelements 201 Längsabschnitte 204 auf, an denen die Kiemen 203 angeordnet sind. Die Längsabschnitte 204 der Rippen 202 können jeweils eine Mehrzahl an Kiemen 203 aufweisen. Alternativ können einige der Längsabschnitte 204 auch keine Kiemen 203 aufweisen.

Die Rippen 202 sind in der Längsrichtung L des Rippenelements 201 aneinandergereiht angeordnet. Dabei weist das Rippenelement 201 eine erste Längsseite 205 und eine der ersten Längsseite 205 gegenüberliegende zweite Längsseite 206 auf. Die Längsabschnitte 204 der Rippen 202 verlaufen schräg angeordnet von der ersten Längsseite 205 zur zweiten Längsseite 206 bzw. von der zweiten Längsseite 206 zur ersten Längsseite 205. Dabei bilden jeweils zwei Längsabschnitte 204 die beiden Schenkel einer V-Form. Im Bereich der Längsseiten 205, 206 weisen die Rippen 202 des Rippenelements 201 Verbindungsabschnitte 207 auf, welche Verbindungsflächen zur Verbindung des Rippenelements 201 mit den Wärmeübertragungselementen ausbilden. Über die von den Verbindungsabschnitten 207 ausgebildeten Verbindungsflächen kann Wärme von den Wärmeübertragungselementen auf die Längsabschnitte 204 der Rippen 202 des Rippenelements 201 sowie von diesen auf den Luftstrom übertragen werden.

Die Rippen 202 bilden zwischen ihren Längsabschnitten 204 und ihren Verbindungsabschnitten 207 Strömungsräume 208 aus, die von dem Luftstrom insbesondere in der Tiefenrichtung T durchströmt werden. Darüber hinaus strömen Teilluftströme des Luftstroms durch die Kiemen 203 aus den Strömungsräumen 208 in die jeweils benachbarten Strömungsräume 208. Dadurch kommt es neben der Durchströmung der Strömungsräume 208 in der Tiefenrichtung T auch zu einer im Wesentlichen quer zur Tiefenrichtung T verlaufenden Durchströmung der Strömungsräume 208 durch die Teilluftströme. Die Strömungsräume 208 werden in dem in Figur 5 gezeigten Ausführungsbeispiel außer durch die Längsabschnitte 204 auch durch die Verbindungsabschnitte 207 begrenzt. Dabei weisen die Strömungsräume 208 entlang der Längsrichtung L des Rippenelements 201 geschnitten ein länglich gestrecktes V-förmiges Querschnittsprofil auf.

Figur 6 zeigt eine Schnittdarstellung des in Figur 5 gezeigten Rippenelements 201, wobei die Schnittführung in der Längsrichtung L des Rippenelements 201 erfolgt. Das Rippenelements 201 weist in der Längsrichtung L des Rippenelements 201 aneinandergereiht angeordnete Rippen 202 auf, wobei die von den Längsabschnitten 204 und den Verbindungsabschnitten 207 der Rippen 202 des Rippenelement 201 in der senkrecht zur Längsrichtung L des Rippenelements 201 angeordneten Tiefenrichtung T von einem Luftstrom durchströmbar sind.

Das Rippenelements 201 weist eine erste Längsseite 205 und eine der ersten Längsseite 205 gegenüberliegende zweite Längsseite 206 auf. Die Längsabschnitte 204 der Rippen 202 des Rippenelements 201 sind von der ersten Längsseite 205 zur zweiten Längsseite 206 bzw. von der zweiten Längsseite 206 zur ersten Längsseite 205 schräg verlaufend angeordnet. Die Verbindungsabschnitte 207 verbinden jeweils zwei benachbarte Längsabschnitte 204 und sind jeweils im Bereich der ersten Längsseite 205 oder der zweiten Längsseite 206 angeordnet. Die Verbindungsabschnitte 207 können reib-, form- und/oder stoffschlüssig mit den Wärmeübertragungselementen verbunden sein. Vorzugsweise kommen hierfür Klebe- oder Lötverfahren zum Einsatz. In dem in Figur 6 gezeigten Ausführungsbeispiel sind die Verbindungsabschnitte 207 abgewinkelt zu den Längsabschnitten 204 angeordnet.

Die Längsabschnitte 204 der Rippen 202 weisen die Kiemen 203 auf, welche aneinandergereiht entlang der Längsabschnitte 204 angeordnet sind. Auf beispielhafte Ausführungsformen der Kiemen 203 wird in den Figuren 7 bis 9 näher eingegangen.

Figur 7 zeigt ein Detail eines gemäß den Figuren 1 und 2 ausgebildeten Rippenelements 1. An den zwischen den beiden Längsseiten 5, 6 des Rippenelements 1 verlaufend angeordneten Längsabschnitten 4 der Rippen 2 sind die Kiemen 3 ausgebildet. Die Längsabschnitte 4 bilden jeweils eine erste Ebene, aus welcher Stege 9 ausgestellt sind. Zwischen zwei Stegen 9 ist jeweils ein Schlitz 10 angeordnet, welcher durch eine Durchbrechung des die Längsabschnitte 4 der Rippen 2 bildenden Materials gebildet ist. Die Stege 9 und die Schlitze 10 bilden zusammen die Kiemen 3 aus.

Die Stege 9 weisen aus den Längsabschnitten 4 ausgestellte Stegflächen 11 auf. Die Stegflächen 11 weisen jeweils zwei Flächenabschnitte 12, 13, einen ersten Flächenabschnitt 12 und einen zweiten Flächenabschnitt 13 auf. Die beiden Flächenabschnitte 12, 13 sind zueinander abgewinkelt angeordnet. Dabei bilden die beiden Flächenabschnitte 12, 13 jeweils einen Schenkel 14, 15 eines Winkels α. Dabei weist der Winkel α in dem in Figur 7 gezeigten Ausführungsbeispiel eine Größe von etwa 160 ° auf. In alternativen Ausführungsbeispielen kann der Winkel α auch größer oder kleiner sein.

Die Flächenabschnitte 12, 13 schneiden jeweils die Tiefenrichtung T, in welcher ein zu erwärmender Luftstrom die von den Längsabschnitten 4 und den Verbindungsabschnitten 7 der Rippen 2 des Rippenelements 1 ausgebildeten Strömungsräume 8 durchströmt, in einem Winkel β. Der Winkel β ist in den in den Figuren 7 bis 9 dargestellten Ausführungsbeispielen kleiner als 90 °.

Figur 8 zeigt ein Detail eines gemäß den Figuren 3 und 4 ausgebildeten Rippenelements 101. An den zwischen den beiden Längsseiten 105, 106 des Rippenelements 101 verlaufend angeordneten Längsabschnitten 104 der Rippen 102 des Rippenelements 101 sind die Kiemen 103 ausgebildet. Die Stege 9 sind aus den Längsabschnitten 104 ausgestellt. Zwischen zwei Stegen 109 ist jeweils ein Schlitz 110 angeordnet, welcher durch eine Durchbrechung des die Längsabschnitte 104 der Rippen 102 des Rippenelements 101 bildenden Materials gebildet ist. Die Stege 109 und die Schlitze 110 bilden zusammen die Kiemen 103 aus.

Die Stege 109 weisen aus den Längsabschnitten 104 ausgestellte Stegflächen 111 auf. Die Stegflächen 111 weisen jeweils zwei Flächenabschnitte 112, 113, einen ersten Flächenabschnitt 112 und einen zweiten Flächenabschnitt 113 auf. Die beiden Flächenabschnitte 112, 113 sind zueinander abgewinkelt angeordnet. Dabei bilden die beiden Flächenabschnitte 112, 113 jeweils einen Schenkel 114, 115 eines Winkels α. Dabei weist der Winkel α in dem in Figur 8 gezeigten Ausführungsbeispiel eine Größe von etwa 160 ° auf. In alternativen Ausführungsbeispielen kann der Winkel α auch größer oder kleiner sein.

Die Flächenabschnitte 112, 113 schneiden die Tiefenrichtung T, in welcher ein zu erwärmender Luftstrom die von den Längsabschnitten 104 und den Verbindungsabschnitten 107 der Rippen 102 des Rippenelements 101 ausgebildeten Strömungsräume 108 durchströmt, in einem Winkel β. Der Winkel β ist in den in den Figuren 7 bis 9 dargestellten Ausführungsbeispielen kleiner als 90 °.

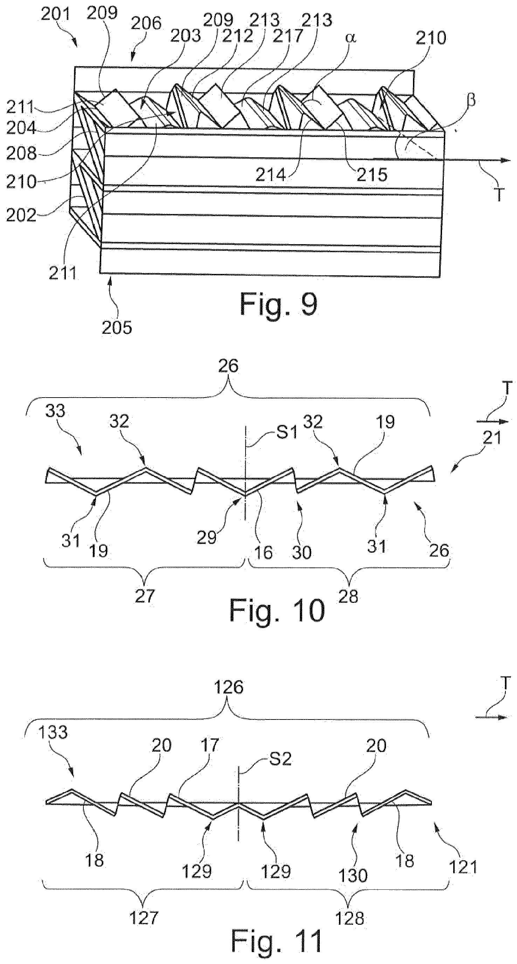

Figur 9 zeigt ein Detail eines gemäß den Figuren 5 und 6 ausgebildeten Rippenelement 201. An den zwischen den beiden Längsseiten 205, 206 des Rippenelements 201 verlaufend angeordneten Längsabschnitten 204 der Rippen 202 sind die Kiemen 203 ausgebildet. Die Stege 209 sind aus den Längsabschnitten 204 ausgestellt. Zwischen zwei Stegen 209 ist jeweils ein Schlitz 210 angeordnet, welcher durch eine Durchbrechung des die Längsabschnitte 204 der Rippen 202 des Rippenelements 101 bildenden Materials gebildet ist. Die Stege 209 und die Schlitze 210 bilden zusammen die Kiemen 203 aus.

Die Stege 209 weisen aus den Längsabschnitten 204 ausgestellte Stegflächen 211 auf. Die Stegflächen 211 weisen jeweils zwei Flächenabschnitte 212, 213, einen ersten Flächenabschnitt 212 und einen zweiten Flächenabschnitt 213 auf. Die beiden Flächenabschnitte 212, 213 sind zueinander abgewinkelt angeordnet. Dabei bilden die beiden Flächenabschnitte 212, 213 jeweils einen Schenkel 214, 215 eines Winkels α. Der Winkel α weist in dem in Figur 9 gezeigten Ausführungsbeispiel eine Größe von etwa 110 ° auf. In alternativen Ausführungsbeispielen kann der Winkel α auch größer oder kleiner sein.

Die Flächenabschnitte 212, 213 schneiden die Tiefenrichtung T, in welcher ein zu erwärmender Luftstrom die von den Längsabschnitten 204 und den Verbindungsabschnitten 207 der Rippen 202 des Rippenelements 101 ausgebildeten Strömungsräume 208 durchströmt, in einem Winkel β. Der Winkel β ist in den in den Figuren 7 bis 9 dargestellten Ausführungsbeispielen kleiner als 90 °.

Die Figuren 10 bis 19 zeigen Ausführungsbeispiele von Kiemen mit alternativen Querschnittsformen der in den Figuren 7 bis 9 gezeigten Stege. Die Schnittrichtung entspricht hierbei der in den Figuren 7 bis 9 gezeigten Tiefenrichtung T. Dabei weisen die Stege jeweils beispielhaft ein im Wesentlichen V-förmiges Querschnittsprofil 16, ein im Wesentlichen W-förmiges Querschnittsprofil 17, ein im Wesentlichen hakenförmiges Querschnittsprofil 18, ein im Wesentlichen Z-förmiges Querschnittsprofil 19 oder ein im Wesentlichen I-förmiges Querschnittsprofil 20 auf. Darüber hinaus können die Stege auch Stegabschnitte mit im Wesentlichen V-förmigen, im Wesentlichen W-förmigen, im Wesentlichen hakenförmigen, im Wesentlichen Z-förmigen und/oder im Wesentlichen I-förmigen Querschnittsprofilen aufweisen.

Dabei bildet bei den in den Figuren 10 bis 19 dargestellten Ausführungsbeispielen jeweils eine Anzahl von zueinander benachbart an einem Längsabschnitt einer Rippe eines erfindungsgemäßen Rippenelements ausgebildeten Stegen eine Gruppe. Die jeweilige Gruppe 22 weist ein spezifisches Anordnungsmuster aus einer Reihenfolge von Stegen mit jeweils einem im Wesentlichen V-förmigen Querschnittsprofil 16, einen im Wesentlichen W-förmigen Querschnittsprofil 17, einen im Wesentlichen hakenförmigen Querschnittsprofil 18, einem im Wesentlichen Z-förmigen Querschnittsprofil 19 und/oder einem im Wesentlichen I-förmigen Querschnittsprofil 20 auf.

Eine Gruppe kann sich dabei über die gesamte Länge der Längsseite einer Rippe eines erfindungsgemäßen Rippenelements erstrecken. Alternativ können auch mehrere identische und/oder unterschiedliche Gruppen entlang einer Längsseite einer Rippe des Rippenelements angeordnet sein.

Die auf diese Art jeweils spezifisch ausgebildeten Gruppen können sich entlang eines Längsabschnitts periodisch wiederholen. Darüber hinaus können mehrere, jeweils unterschiedlich ausgebildete Gruppen, entlang eines Längsabschnitts angeordnet sein.

Figur 10 zeigt ein erstes Ausführungsbeispiel einer an einem Längsabschnitt 21 einer Rippe eines erfindungsgemäßen Rippenelements angeordneten Gruppe 26 von Stegen. Die Gruppe 26 weist eine Spiegelachse S1 auf, welche die Gruppe 26 in zwei zueinander spiegelsymmetrisch ausgebildete und an der Spiegelachse S1 aneinander angrenzende Abschnitte 27, 28 unterteilt. An der Spiegelachse S1 ist ein Steg mit einem im Wesentlichen V-förmigen Querschnittsprofil 16 angeordnet. Die beiden Schenkel des V-förmigen Querschnittsprofils bilden dabei einen Winkel, dessen Scheitelpunkt auf der Spiegelachse S1 angeordnet ist. Die Spitze 29 des V-förmigen Querschnittsprofils 16 ist dabei aus einer ersten Seite 30 des Längsabschnitts 21 ausgestellt.

Die beiden Abschnitte 27, 28 weisen jeweils einen Steg mit einem im Wesentlichen Z-förmigen Querschnittsprofil 19 mit jeweils einer ersten Spitze 31 und einer zweiten Spitze 32 auf. Die ersten Spitzen 31 sind jeweils aus der ersten Seite 30 des Längsabschnitts 21 ausgestellt. Die zweiten Spitzen 32 sind jeweils aus einer der ersten Seite 30 des Längsabschnitts 21 gegenüberliegenden zweiten Seite 33 ausgestellt.

Figur 11 zeigt ein weiteres Ausführungsbeispiel einer an einem Längsabschnitt 121 einer Rippe eines erfindungsgemäßen Rippenelements angeordneten Gruppe 126 von Stegen. Die Gruppe 126 weist eine Spiegelachse S2 auf, welche die Gruppe 126 in zwei zueinander spiegelsymmetrisch ausgebildete und an der Spiegelachse S2 aneinander angrenzende Abschnitte 127, 128 unterteilt. An der Spiegelachse S2 ist ein Steg mit einem im Wesentlichen W-förmigen Querschnittsprofil 17 angeordnet. Die beiden hakenförmig ausgebildeten Seiten des W-förmigen Querschnittsprofils 17 bilden dabei einen Winkel, dessen Scheitelpunkt auf der Spiegelachse S2 angeordnet ist. Die Spitzen 129 der beiden hakenförmig ausgebildeten Seiten des W-förmigen Querschnittsprofils 17 sind aus einer ersten Seite 130 des Längsabschnitts 121 ausgestellt.

Die beiden Abschnitte 127, 128 weisen jeweils einen Steg mit einem I-förmigen Querschnittsprofil 20 und einen Steg mit einem im Wesentlichen hakenförmigen Querschnittsprofil 18 auf, welche jeweils abschnittsweise aus der ersten Seite 130 des Längsabschnitts 121 und einer der ersten Seite 130 gegenüberliegenden zweiten Seite 133 des Längsabschnitts 121 ausgestellt sind.

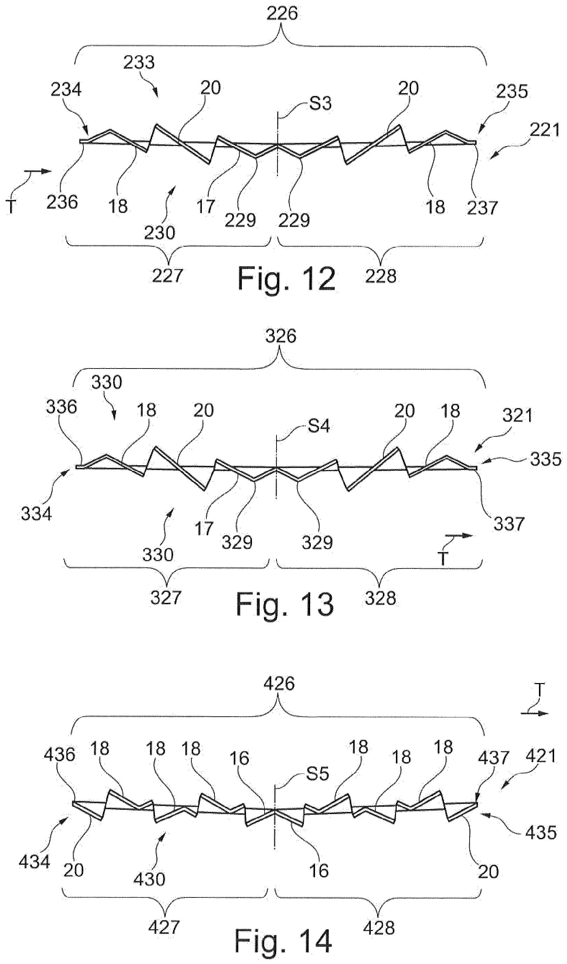

Figur 12 zeigt ein weiteres Ausführungsbeispiel einer an einem Längsabschnitt 221 einer Rippe eines erfindungsgemäßen Rippenelements angeordneten Gruppe 226 von Stegen. Die Gruppe 226 weist eine Spiegelachse S3 auf, welche die Gruppe 226 in zwei zueinander spiegelsymmetrisch ausgebildete und an der Spiegelachse S3 aneinander angrenzende Abschnitte 227, 228 unterteilt.

An der Spiegelachse S3 ist ein Steg mit einem im Wesentlichen W-förmigen Querschnittsprofil 17 angeordnet. Die beiden hakenförmig ausgebildeten Seiten des W-förmigen Querschnittsprofils 17 bilden dabei einen Winkel, dessen Scheitelpunkt auf der Spiegelachse S3 angeordnet ist. Die Spitzen 229 der beiden hakenförmig ausgebildeten Seiten des W-förmigen Querschnittsprofils 17 sind aus einer ersten Seite 230 des Längsabschnitts 221 ausgestellt.

Die beiden Abschnitte 227, 228 weisen jeweils einen Steg mit einem I-förmigen Querschnittsprofil 20 und einen Steg mit einem im Wesentlichen hakenförmigen Querschnittsprofil 18 auf, welche jeweils abschnittsweise aus der ersten Seite 230 des Längsabschnitts 221 und einer der ersten Seite 230 gegenüberliegenden zweiten Seite 233 des Längsabschnitts 121 ausgestellt sind.

Die Gruppe 226 weist einen ersten Außenrand 234 und einen zweiten Außenrand 235 auf. Die Stege mit dem im Wesentlichen hakenförmigen Querschnittsprofil 18 sind dabei jeweils an einem der beiden Außenränder 234, 235 der Gruppe 226 angeordnet. Der am ersten Außenrand 234 angeordnete Steg mit einem im Wesentlichen hakenförmigen Querschnittsprofil 18 weist ein zum ersten Außenrand 234 weisendes Stegende 236 auf, welches im Wesentlichen parallel zur Tiefenrichtung T angeordnet ist. Der am zweiten Außenrand 235 angeordnete Steg mit einem im Wesentlichen hakenförmigen Querschnittsprofil 18 weist ein zum zweiten Außenrand 235 weisendes Stegende 237 auf, welches im Wesentlichen parallel zur Tiefenrichtung T angeordnet ist.

Neben diesem Merkmal unterscheiden sich die in den Figuren 11 und 12 gezeigten Ausführungsbeispiele hinsichtlich der Größe des Winkels, mit welchem die Stege mit einem I-förmigen Querschnittsprofil 20 die Tiefenrichtung T schneiden.

Figur 13 zeigt ein weiteres Ausführungsbeispiel einer an einem Längsabschnitt 321 einer Rippe eines erfindungsgemäßen Rippenelements angeordneten Gruppe 326 von Stegen. Die Gruppe 326 weist eine Spiegelachse S4 auf, welche die Gruppe 326 in zwei zueinander spiegelsymmetrisch ausgebildete und an der Spiegelachse S4 aneinander angrenzende Abschnitte 327, 328 unterteilt.

An der Spiegelachse S4 ist ein Steg mit einem im Wesentlichen W-förmigen Querschnittsprofil 17 angeordnet. Die beiden hakenförmig ausgebildeten Seiten des W-förmigen Querschnittsprofils 17 bilden dabei einen Winkel, dessen Scheitelpunkt auf der Spiegelachse S4 angeordnet ist. Die Spitzen 329 der beiden hakenförmig ausgebildeten Seiten des W-förmigen Querschnittsprofils 17 sind aus einer ersten Seite 330 des Längsabschnitts 321 ausgestellt.

Die beiden Abschnitte 327, 328 weisen jeweils einen Steg mit einem I-förmigen Querschnittsprofil 20 und einen Steg mit einem im Wesentlichen hakenförmigen Querschnittsprofil 18 auf, welche jeweils abschnittsweise aus der ersten Seite 330 des Längsabschnitts 121 und einer der ersten Seite 330 gegenüberliegenden zweiten Seite 333 des Längsabschnitt 321 ausgestellt sind.

Die Gruppe 326 weist einen ersten Außenrand 334 und einen zweiten Außenrand 335 auf. Die Stege mit dem im Wesentlichen hakenförmigen Querschnittsprofil 18 sind dabei jeweils an einem der beiden Außenränder 334, 335 der Gruppe 326 angeordnet. Der am ersten Außenrand 334 angeordnete Steg mit einem im Wesentlichen hakenförmigen Querschnittsprofil 18 weist ein zum ersten Außenrand 334 weisendes Stegende 336 auf, welches im Wesentlichen parallel zur Tiefenrichtung T angeordnet ist. Der am zweiten Außenrand 335 angeordnete Steg mit einem im Wesentlichen hakenförmigen Querschnittsprofil 18 weist ein zum zweiten Außenrand 335 weisendes Stegende 337 auf, welches im Wesentlichen parallel zur Tiefenrichtung T angeordnet ist.

Die in den Figuren 11, 12 und 13 gezeigten Ausführungsbeispiele unterscheiden sich insbesondere hinsichtlich der Größe des Winkels, mit welchem die Stege mit einem I-förmigen Querschnittsprofil 20 die Tiefenrichtung T schneiden.

Figur 14 zeigt ein weiteres Ausführungsbeispiel einer an einem Längsabschnitt 421 einer Rippe eines erfindungsgemäßen Rippenelements angeordneten Gruppe 426 von Stegen. Die Gruppe 426 weist eine Spiegelachse S5 auf, welche die Gruppe 426 in zwei zueinander spiegelsymmetrisch ausgebildete und an der Spiegelachse S5 aneinander angrenzende Abschnitte 427, 428 unterteilt.

An der Spiegelachse S5 ist ein Steg mit einem im Wesentlichen V-förmigen Querschnittsprofil 16 angeordnet. Die beiden Schenkel des V-förmig ausgebildeten Querschnittsprofils 16 bilden dabei einen Winkel, dessen Scheitelpunkt auf der Spiegelachse S5 angeordnet ist. Dabei sind die beiden Schenkel des V-förmig ausgebildeten Querschnittsprofils 16 aus einer ersten Seite 430 des Längsabschnitts 421 ausgestellt.

Die beiden Abschnitte 427, 428 weisen jeweils drei Stege mit einem im Wesentlichen hakenförmigen Querschnittsprofil 18 auf. Die Stege mit dem hakenförmigen Querschnittsprofil 18 sind jeweils wechselweise aus der ersten Seite 430 des Längsabschnitts 421 oder einer der ersten Seite 430 gegenüberliegenden zweiten Seite 433 des Längsabschnitts 421 ausgestellt.

Die Gruppe 426 weist darüber hinaus einen ersten Außenrand 434 und einen zweiten Außenrand 435 auf. An den Außenrändern 434, 435 ist jeweils ein Steg mit einem im Wesentlichen I-förmigen Querschnittsprofil 20 angeordnet.

Der am ersten Außenrand 434 angeordnete Steg mit einem im Wesentlichen I-förmigen Querschnittsprofil 20 weist ein zum ersten Außenrand 434 weisendes Stegende 436 auf, welches im Wesentlichen parallel zur Tiefenrichtung T angeordnet ist. Der am zweiten Außenrand 435 angeordnete Steg mit einem im Wesentlichen I-förmigen Querschnittsprofil 20 weist ein zum zweiten Außenrand 435 weisendes Stegende 437 auf, welches im Wesentlichen parallel zur Tiefenrichtung T angeordnet ist.

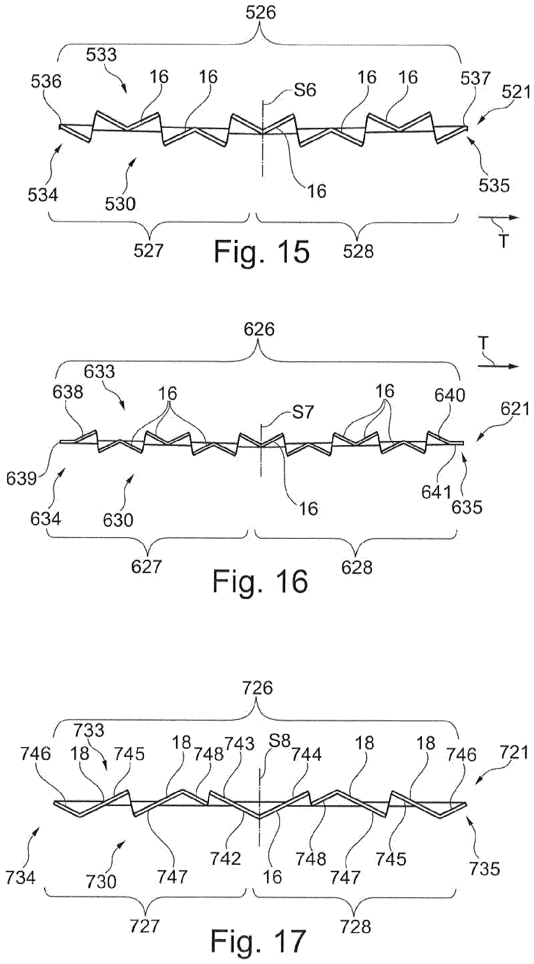

Figur 15 zeigt ein weiteres Ausführungsbeispiel einer an einem Längsabschnitt 521 einer Rippe eines erfindungsgemäßen Rippenelements angeordneten Gruppe 526 von Stegen. Der Längsabschnitt 521 weist eine erste Seite 530 und eine der ersten Seite 530 gegenüberliegende zweite Seite 533 auf. Die Gruppe 526 weist eine Spiegelachse S6 auf, welche die Gruppe 526 in zwei zueinander spiegelsymmetrisch ausgebildete und an der Spiegelachse S6 aneinander angrenzende Abschnitte 527, 528 unterteilt.

An der Spiegelachse S6 ist ein Steg mit einem im Wesentlichen V-förmigen Querschnittsprofil 16 angeordnet. Die beiden Schenkel des V-förmig ausgebildeten Querschnittsprofils 16 bilden dabei einen Winkel, dessen Scheitelpunkt auf der Spiegelachse S6 angeordnet ist. Dabei sind die beiden Schenkel des V-förmig ausgebildeten Querschnittsprofils 16 aus der zweiten Seite 533 des Längsabschnitts 521 ausgestellt.

Die beiden Abschnitte 527, 528 weisen jeweils zwei weitere Stege mit einem im Wesentlichen V-förmigen Querschnittsprofil 16 auf. Die Stege mit dem im Wesentlichen V-förmigen Querschnittsprofil 16 sind jeweils wechselweise aus der ersten Seite 530 des Längsabschnitts 521 oder der zweiten Seite 533 des Längsabschnitts 521 ausgestellt.

Die Gruppe 526 weist darüber hinaus einen ersten Außenrand 534 und einen zweiten Außenrand 535 auf. An den Außenrändern 534, 535 ist jeweils ein Steg mit einem im Wesentlichen I-förmigen Querschnittsprofil 20 angeordnet.

Der am ersten Außenrand 534 angeordnete Steg mit einem im Wesentlichen I-förmigen Querschnittsprofil 20 weist ein zum ersten Außenrand 534 weisendes Stegende 536 auf, welches im Wesentlichen parallel zur Tiefenrichtung T angeordnet ist. Der am zweiten Außenrand 535 angeordnete Steg mit einem im Wesentlichen I-förmigen Querschnittsprofil 20 weist ein zum zweiten Außenrand 535 weisendes Stegende 537 auf, welches im Wesentlichen parallel zur Tiefenrichtung T angeordnet ist.

Figur 16 zeigt ein weiteres Ausführungsbeispiel einer an einem Längsabschnitt 621 einer Rippe eines erfindungsgemäßen Rippenelements angeordneten Gruppe 626 von Stegen. Der Längsabschnitt 621 weist eine erste Seite 630 und eine der ersten Seite 630 gegenüberliegende zweite Seite 633 auf. Die Gruppe 626 weist eine Spiegelachse S7 auf, welche die Gruppe 626 in zwei zueinander spiegelsymmetrisch ausgebildete und an der Spiegelachse S7 aneinander angrenzende Abschnitte 627, 628 unterteilt.

An der Spiegelachse S7 ist ein Steg mit einem im Wesentlichen V-förmigen Querschnittsprofil 16 angeordnet. Die beiden Schenkel des V-förmig ausgebildeten Querschnittsprofils 16 bilden dabei einen Winkel, dessen Scheitelpunkt auf der Spiegelachse S7 angeordnet ist. Dabei sind die beiden Schenkel des V-förmig ausgebildeten Querschnittsprofils 16 aus der zweiten Seite 633 des Längsabschnitts 621 ausgestellt.

Die beiden Abschnitte 627, 628 weisen jeweils drei weitere Stege mit einem im Wesentlichen V-förmigen Querschnittsprofil 16 auf. Die Stege mit dem im Wesentlichen V-förmigen Querschnittsprofil 16 sind jeweils wechselweise aus der ersten Seite 630 des Längsabschnitts 621 oder der zweiten Seite 633 des Längsabschnitts 621 ausgestellt.

Die Gruppe 626 weist darüber hinaus einen ersten Außenrand 634 und einen zweiten Außenrand 635 auf. An den Außenrändern 634, 635 ist jeweils ein Steg mit einem im Wesentlichen hakenförmigen Querschnittsprofil 18 angeordnet. Dabei sind die beiden Stege mit einem im Wesentlichen hakenförmigen Querschnittsprofil 18 aus der zweiten Seite 633 des Längsabschnitts 621 ausgestellt.

Der am ersten Außenrand 634 angeordnete Steg mit einem im Wesentlichen hakenförmigen Querschnittsprofil 18 weist einen zur Spiegelachse S7 weisend angeordneten ersten Schenkel 638 und einen zum ersten Außenrand 634 weisend angeordneten zweiten Schenkel 639 auf, wobei der zweite Schenkel 639 im Wesentlichen parallel zur Tiefenrichtung T angeordnet ist.

Der im Bereich des zweiten Außenrands 635 angeordnete Steg mit einem im Wesentlichen hakenförmigen Querschnittsprofil 18 weist einen zur Spiegelachse S7 weisend angeordneten ersten Schenkel 640 und einen zum zweiten Außenrand 635 weisend angeordneten zweiten Schenkel 641 auf, wobei der zweite Schenkel 641 im Wesentlichen parallel zur Tiefenrichtung T angeordnet ist.

Figur 17 zeigt ein weiteres Ausführungsbeispiel einer an einem Längsabschnitt 721 einer Rippe eines erfindungsgemäßen Rippenelements angeordneten Gruppe 726 von Stegen. Der Längsabschnitt 721 weist eine erste Seite 730 und eine der ersten Seite 730 gegenüberliegende zweite Seite 733 auf. Die Gruppe 726 weist eine Spiegelachse S8 auf, welche die Gruppe 726 in zwei zueinander spiegelsymmetrisch ausgebildete und an der Spiegelachse S8 aneinander angrenzende Abschnitte 727, 728 unterteilt.

An der Spiegelachse S8 ist ein Steg mit einem im Wesentlichen V-förmigen Querschnittsprofil 16 angeordnet. Die beiden Schenkel des V-förmig ausgebildeten Querschnittsprofils 16 bilden dabei einen Winkel, dessen Scheitelpunkt auf der Spiegelachse S8 angeordnet ist. Dabei ist ein erster Abschnitt 742 des V-förmig ausgebildeten Querschnittsprofils 16 aus der ersten Seite 730 des Längsabschnitts 721 ausgestellt. An gegenüberliegenden Enden des ersten Abschnitts 742 des V-förmig ausgebildeten Querschnittsprofils 16 grenzen jeweils ein zweiter Abschnitt 743 und ein dritter Abschnitt 744 des im Wesentlichen V-förmig ausgebildeten Querschnittsprofils 16 an. Der zweite Abschnitt 743 und der dritte Abschnitt 744 des im Wesentlichen V-förmig ausgebildeten Querschnittsprofils 16 sind aus der zweiten Seite 733 des Längsabschnitts 721 ausgestellt.

Die Gruppe 726 weist darüber hinaus einen ersten Außenrand 734 und einen zweiten Außenrand 735 auf. In den Bereichen der beiden Außenränder 734, 735 ist jeweils ein randseitiger Steg mit einem im Wesentlichen hakenförmigen Querschnittsprofil 18 angeordnet. Die randseitigen Stege mit dem im Wesentlichen hakenförmigen Querschnittsprofil 18 weisen jeweils einen ersten Schenkel 745 und einen zweiten Schenkel 746 auf, wobei der erste Schenkel 745 etwa die doppelte Länge des zweiten Schenkels 746 aufweist. Die ersten Schenkel 745 weisen einen im Wesentlichen zur Spiegelachse S8 weisend angeordneten ersten Abschnitt auf, welcher aus der zweiten Seite 733 des Längsabschnitts 721 ausgestellt ist und einen im Wesentlichen von der Spiegelachse S8 wegweisend angeordneten zweiten Abschnitt, welcher aus der ersten Seite 730 des Längsabschnitts 721 ausgestellt ist.

Zwischen den randseitigen Stegen mit dem im Wesentlichen hakenförmigen Querschnittsprofil 18 und dem im Bereich der Spiegelachse S8 angeordneten Steg mit einem im Wesentlichen V-förmigen Querschnittsprofil 16 ist in den beiden Abschnitten 727, 728 jeweils ein weiterer Steg mit einem im Wesentlichen hakenförmigen Querschnittsprofil 18 angeordnet. Die beiden weiteren Stege mit einem im Wesentlichen hakenförmigen Querschnittsprofil 18 weisen jeweils einen ersten Schenkel 747 und einen zweiten Schenkel 748 auf, wobei der erste Schenkel 747 etwa die doppelte Länge des zweiten Schenkels 748 aufweist. Die ersten Schenkel 747 weisen einen im Wesentlichen zur Spiegelachse S8 weisend angeordneten ersten Abschnitt auf, welcher aus der zweiten Seite 733 des Längsabschnitts 721 ausgestellt ist und einen im Wesentlichen von der Spiegelachse S8 wegweisend angeordneten zweiten Abschnitt, welcher aus der ersten Seite 730 des Längsabschnitts 721 ausgestellt ist.

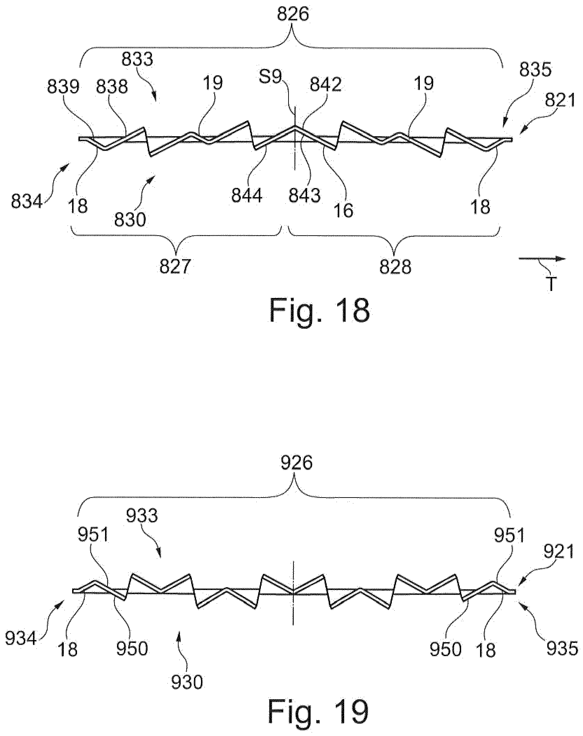

Figur 18 zeigt ein weiteres Ausführungsbeispiel einer an einem Längsabschnitt 821 einer Rippe eines erfindungsgemäßen Rippenelements angeordneten Gruppe 826 von Stegen. Der Längsabschnitt 821 weist eine erste Seite 830 und eine der ersten Seite 830 gegenüberliegende zweite Seite 833 auf. Die Gruppe 826 weist eine Spiegelachse S9 auf, welche die Gruppe 826 in zwei zueinander spiegelsymmetrisch ausgebildete und an der Spiegelachse S9 aneinander angrenzende Abschnitte 827, 828 unterteilt.

An der Spiegelachse S9 ist ein Steg mit einem im Wesentlichen V-förmigen Querschnittsprofil 16 angeordnet. Die beiden Schenkel des V-förmig ausgebildeten Querschnittsprofils 16 bilden dabei einen Winkel, dessen Scheitelpunkt auf der Spiegelachse S9 angeordnet ist. Dabei ist ein erster Abschnitt 842 des V-förmig ausgebildeten Querschnittsprofils 16 aus der zweiten Seite 833 des Längsabschnitts 821 ausgestellt. An gegenüberliegenden Enden des ersten Abschnitts 842 des V-förmig ausgebildeten Querschnittsprofils 16 grenzen jeweils ein zweiter Abschnitt 843 und ein dritter Abschnitt 844 des im Wesentlichen V-förmig ausgebildeten Querschnittsprofils 16 an. Der zweite Abschnitt 843 und der dritte Abschnitt 844 des im Wesentlichen V-förmig ausgebildeten Querschnittsprofils 16 sind aus der ersten Seite 830 des Längsabschnitts 821 ausgestellt.

Benachbart zu den Abschnitten 843, 844 ist jeweils ein Steg mit einem im Wesentlichen Z-förmigen Querschnittsprofil 19 angeordnet. Das Z-förmige Querschnittsprofil weist zwei im Wesentlichen hakenförmige Tellabschnitte auf, die jeweils abschnittsweise aus der ersten Seite 830 und der zweiten Seite 833 des Längsabschnitts 821 ausgestellt sind.

Die Gruppe 826 weist darüber hinaus einen ersten Außenrand 834 und einen zweiten Außenrand 835 auf. An den Außenrändern 834, 835 ist jeweils ein Steg mit einem im Wesentlichen hakenförmigen Querschnittsprofil 18 angeordnet. Dabei sind die beiden Stege mit einem im Wesentlichen hakenförmigen Querschnittsprofil 18 abschnittsweise aus der ersten Seite 830 und der zweiten Seite 833 des Längsabschnitts 821 ausgestellt.

Die jeweils im Bereich eines der Außenränder 834, 835 angeordneten Stege mit einem im Wesentlichen hakenförmigen Querschnittsprofil 18 weisen jeweils ein zu den Außenrändern 834, 835 weisenden endständigen Abschnitt auf, welcher jeweils im Wesentlichen parallel zur Tiefenrichtung T angeordnet ist.

Figur 19 zeigt ein weiteres Ausführungsbeispiel einer an einem Längsabschnitt 921 einer Rippe eines erfindungsgemäßen Rippenelements angeordneten Gruppe 926 von Stegen. Das in Figur 19 gezeigte Ausführungsbeispiel entspricht im Wesentlichen dem in Figur 16 gezeigten Ausfiührungsbeispiel. In dem in Figur 19 gezeigten Ausführungsbeispiel weisen im Unterscheid zu dem in Figur 16 gezeigten Ausführungsbeispiel die beiden im Bereich der Außenränder 934, 935 angeordneten Stege mit einem im Wesentlichen hakenförmigen Querschnittsprofil 18 einen aus der ersten Seite 930 des Längsabschnitts 921 ausgestellten Abschnitt 950 und einen aus der zweiten Seite 933 des Längsabschnitts 921 ausgestellten Abschnitt 951 auf.

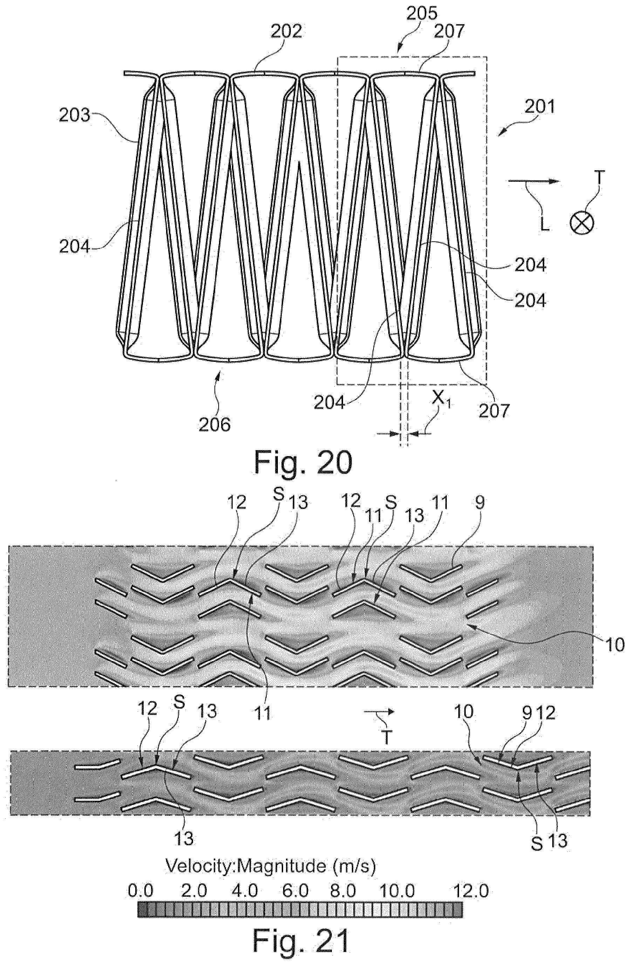

Figur 20 zeigt eine Vergrößerung des in Figur 6 gezeigten Details eines Rippenelements 201 gemäß Figur 5. Die Schnittführung erfolgt hierbei ebenfalls in der Längsrichtung L des Rippenelements 201. Das Rippenelement 201 weist in der Längsrichtung L des Rippenelements 201 aneinandergereiht angeordnete Rippen 202 auf, welche in der senkrecht zur Längsrichtung L des Rippenelements 201 angeordneten Tiefenrichtung T von einem Luftstrom durchströmbar sind.

Das Rippenelement 201 weist eine erste Längsseite 205 und eine der ersten Längsseite 205 gegenüberliegende zweite Längsseite 206 auf. Die Längsabschnitte 204 der Rippen 202 sind von der ersten Längsseite 205 zur zweiten Längsseite 206 bzw. von der zweiten Längsseite 206 zur ersten Längsseite 205 schräg verlaufend angeordnet. Die Verbindungsabschnitte 207 verbinden jeweils zwei benachbarte Längsabschnitte 204 und sind jeweils im Bereich der ersten Längsseite 205 oder der zweiten Längsseite 206 angeordnet. Die Verbindungsabschnitte 207 können reib-, form- und/oder stoffschlüssig mit den Wärmeübertragungselementen verbunden sein. Vorzugsweise kommen hierfür Klebe- oder Lötverfahren zum Einsatz. In dem in Figur 20 gezeigten Ausführungsbeispiel sind die Verbindungsabschnitte 207 abgewinkelt zu den Längsabschnitten 204 angeordnet. Die Längsabschnitte 204 der Rippen 202 weisen die Kiemen 203 auf, welche aneinandergereiht entlang der Längsabschnitte 204 angeordnet sind.

Die einander zugewandt angeordneten Längsabschnitte 204 zweier benachbarter Rippen 202 sind jeweils im Bereich der ersten Längsseite 205 oder der zweiten Längsseite 206 des Rippenelements 201 miteinander verbunden. Dadurch verringert sich die Länge des zwischen den beiden einander zugewandten Längsabschnitten 204 angeordneten Rippenabstands X₁ hin zur ersten Längsseite 205 oder hin zur zweiten Längsseite 206 des Rippenelements 201. Im Bereich der Verbindungsabschnitte 207 benachbarter Rippen 202 berühren sich die benachbarten Rippen 202 und der Rippenabstand X₁ geht gegen 0.

Figur 21 zeigt eine entlang der Tiefenrichtung geschnittene Ansicht von Stegen 9 und Schlitzen 10 eines gemäß den Figuren 1, 2 und 7 ausgebildeten Rippenelements. Über die Schnittdarstellung ist ein Luftgeschwindigkeitsprofil der entlang der Stegflächen 11 bzw. der Flächenabschnitte 12, 13 strömenden Luft gelegt. Aus dem Geschwindigkeitsprofil lässt sich ablesen, dass die Luft beim Strömen entlang der Stegflächen 11 bzw. der Flächenabschnitte 12, 13, bedingt durch die abgewinkelte Anordnung der Flächenabschnitte, jeweils an den Scheitelpunkten S ihre Richtung und ihre Geschwindigkeit ändert. Dies führt insgesamt zu einer Homogenisierung des Luftgeschwindigkeitsprofils sowie auch des Lufttemperaturprofils. Die Folge ist eine hohe Wärmeübertragungsieistung, kombiniert mit einem geringen Druckverlust seitens des das Rippenelement durchströmenden Luftstroms.

## Patentansprüche

1. Rippenelements (1, 101, 201) für einen Wärmeübertrager, insbesondere für eine Heizungs-, Lüftungs- und/oder Klimaanlage eines Kraftfahrzeugs, mit einer Vielzahl von Verbindungsabschnitten (7, 107, 207) und von Längsabschnitten (4, 21, 104, 121, 204, 221, 321, 421, 521, 621, 721, 821, 921), wobei jeweils zwei benachbarte Längsabschnitte (4, 21, 104, 121, 204, 221, 321, 421, 521, 621, 721, 821, 921) durch einen Verbindungsabschnitt (7, 107, 207) miteinander verbunden sind, wobei zumindest einer der Längsabschnitte (4, 21, 104, 121, 204, 221, 321, 421, 521, 621, 721, 821, 921) aus Stegen (9, 109, 209) und Schlitzen (10, 110, 210) ausgebildete Kiemen (3, 103, 203) aufweist, wobei zumindest einer der Stege (9, 109, 209) eine ausgestellte Stegfläche (11, 111, 211) aufweist, wobei die Stegfläche (11, 111, 211) aus dem zumindest einem Längsabschnitt (4, 104, 204) ausgestellt ist, **dadurch gekennzeichnet, dass** die Stegfläche (11, 111, 211) zumindest zwei zueinander abgewinkelt angeordnete Flächenabschnitte (12, 13, 112, 113, 212, 213) bildet.

2. Rippenelement (1, 101, 201) für einen Wärmeübertrager nach Anspruch 1, **dadurch gekennzeichnet, dass** eine Vielzahl der Stege (9, 109, 209) oder jeder der Stege (9, 109, 209) jeweils eine aus dem zumindest einem Längsabschnitt (4, 21, 104, 121, 204, 221, 321, 421, 521, 621, 721, 821, 921) ausgestellte Stegfläche (11, 111, 211) aufweist, welche zumindest zwei zueinander abgewinkelt angeordnete Flächenabschnitte (12, 13, 112, 113, 212, 213) bildet.

3. Rippenelement (1, 101, 201) für einen Wärmeübertrager nach Anspruch 1 oder 2, **dadurch gekennzeichnet, dass** eine Vielzahl oder alle der Längsabschnitte (4, 21, 104, 121, 204, 221, 321, 421, 521, 621, 721, 821, 921) ausgestellte Stegflächen (11, 111, 211) mit zumindest zwei zueinander abgewinkelt angeordneten Flächenabschnitten (12, 13, 112, 113, 212, 213) aufweist bzw. aufweisen.

4. Rippenelement (1, 101, 201) für einen Wärmeübertrager nach Anspruch 1, 2 oder 3, **dadurch gekennzeichnet, dass** zwischen den Verbindungsabschnitten (7, 107, 207) und den Längsabschnitten (4, 21, 104, 121, 204, 221, 321, 421, 521, 621, 721, 821, 921) Strömungsräume (8, 108, 208) ausgebildet sind, welche in einer Tiefenrichtung T, insbesondere mit Luft, durchströmbar sind, wobei die von den jeweiligen Stegffächen (11, 111, 211) gebildeten Flächenabschnitte (12, 13, 112, 113, 212, 213) die Tiefenrichtung T in einem Winkel β schneiden.

5. Rippenelement (1, 101, 201) für einen Wärmeübertrager nach Anspruch 1, 2, 3 oder 4, **dadurch gekennzeichnet, dass** die Stege (9, 109, 209) ein V-förmiges, W-förmiges, Z-förmiges, hakenförmiges und/oder I-förmiges Querschnittsprofil (16, 17, 18, 19, 20) und/oder Stegabschnitte mit einem V-förmigen, W-förmigen, Z-förmigen, hakenförmigen und/oder I-förmigen Querschnittsprofil aufweisen, wobei die Stege mit einem V-förmigen, W-förmigen, Z-förmigen, L-förmigen, I-förmigen und/oder hakenförmigen Querschnittsprofil (16, 17, 18, 19, 20) und/oder die Stegabschnitte mit einem V-förmigen, W-förmigen, Z-förmigen, L-förmigen, I-förmigen und/oder hakenförmigen Querschnittsprofil aus einer ersten Seite (30, 130, 230, 330, 430, 530, 630, 730, 830, 930) des zumindest einen Längsabschnitts (4, 21, 104, 121, 204, 221, 321, 421, 521, 621, 721, 821, 921) und/oder aus einer der ersten Seite (30, 130, 230, 330, 430, 530, 630, 730, 830, 930) gegenüberliegenden zweiten Seite (33, 133, 233, 333, 433, 533, 633, 733, 833, 933) des zumindest einen Längsabschnitts (4, 21, 104, 121, 204, 221, 321, 421, 521, 621, 721, 821, 921) ausgestellt sind.

6. Rippenelements (1, 101, 201) für einen Wärmeübertrager nach Anspruch 5, **dadurch gekennzeichnet, dass** eine Anzahl benachbart zueinander angeordnete Stege (9, 109, 209) zumindest eine Gruppe (26, 126, 226, 326, 426, 526, 626, 726, 826, 926) bildet, wobei die zumindest eine Gruppe (26, 126, 226, 326, 426, 526, 626, 726, 826, 926) ein für die zumindest eine Gruppe (26, 128, 226, 326, 426, 526, 626, 726, 826, 926) spezifisches Anordnungsmuster aus einer Reihenfolge von Stegen (9, 109, 209) mit jeweils einem V-förmigen, W-förmigen, Z-förmigen, hakenförmigen und/oder I-förmigen Querschnittsprofil (16, 17, 18, 19, 20) und/oder Stegabschnitten mit jeweils einem V-förmigen, W-förmigen, Z-förmigen, I-förmigen und/oder hakenförmigen Querschnittsprofil aufweist.

7. Rippenelement (1, 101, 201) für einen Wärmeübertrager nach Anspruch 6, **dadurch gekennzeichnet, dass** der zumindest eine Längsabschnitt (4, 21, 104, 121, 204, 221, 321, 421, 521, 621, 721, 821, 921) eine Mehrzahl an Gruppen (26, 126, 226, 326, 426, 526, 626, 726, 826, 926) aufweist, welche jeweils ein für die jeweilige Gruppe (26, 126, 226, 326, 426, 526, 626, 726, 826, 926) spezifisches Anordnungsmuster aus einer Reihenfolge von Stegen (9, 109, 209) mit jeweils einem V-förmigen, W-förmigen, Z-förmigen, hakenförmigen, und/oder I-förmigen Querschnittsprofil (16, 17, 18) und/oder Stegabschnitten mit jeweils einem V-förmigen, W-förmigen, Z-förmigen, hakenförmigen und/oder I-förmigen Querschnittsprofil aufweist.

8. Rippenelement (1, 101, 201) für einen Wärmeübertrager nach Anspruch 6 oder 7, **dadurch gekennzeichnet, dass** der zumindest eine Längsabschnitt (4, 21, 104, 121, 204, 221, 321, 421, 521, 621, 721, 821, 921) zumindest eine sich periodisch entlang des zumindest einen Längsabschnitts (4, 21, 104, 121, 204, 221, 321, 421, 521, 621, 721, 821, 921) wiederholende Gruppe (26, 126, 226, 326, 426, 526, 626, 726, 826, 926) aufweist.

9. Rippenelements (1, 101, 201) für einen Wärmeübertrager nach Anspruch 6, 7 oder 8, **dadurch gekennzeichnet, dass** die zumindest eine Gruppe (26, 126, 226, 326, 426, 526, 626, 726, 826, 926) zumindest eine Spiegelachse aufweist, welche die Gruppe (26, 126, 226, 326, 426, 526, 626, 726, 826, 926) in zwei zueinander spiegelsymmetrisch ausgebildete und aneinander angrenzende Abschnitte (27, 28, 127, 128, 227, 228, 327, 328, 427, 428, 527, 528, 627, 628, 727, 728, 827, 828) unterteilt.

10. Rippenelements (1, 101 201) für einen Wärmeübertrager nach einem der vorhergehenden Ansprüche, **dadurch gekennzeichnet, dass** die Längsabschnitte (4, 21, 104, 121, 204, 221, 321, 421, 521, 621, 721, 821, 921) und die Verbindungsabschnitte (7, 107, 207) ein U-förmiges-, V-förmiges, rechteckförmiges, trapezförmiges und/oder Ω-förmiges Querschnittsprofil ausbilden.

11. Rippenelement (1, 101, 201) für einen Wärmeübertrager nach einem der vorhergehenden Ansprüche, **dadurch gekennzeichnet, dass** die Verbindungsabschnitte (7, 107, 207) stoff-, reib- und/oder formschlüssig mit Wärmeübertragungsflächen des Wärmeübertragers verbunden sind.

12. Wärmeübertrager, insbesondere für eine Heizungs-, Lüftungs- und/oder Klimaanlage eines Kraftfahrzeugs, **dadurch gekennzeichnet, dass** der Wärmeübertrager zumindest ein Rippenelement (1, 101, 201) für einen Wärmeübertrager nach einem der Ansprüche 1 bis 11 aufweist.

13. Wärmeübertrager nach Anspruch 12, **dadurch gekennzeichnet, dass** der Wärmeübertrager zumindest zwei Wärmeübertragungselemente aufweist, wobei zwischen den beiden Wärmeübertragungselementen ein gemäß einem der Ansprüche 1 bis 11 ausgebildetes Rippenelement (1, 101, 201) angeordnet ist.

14. Wärmeübertrager nach Anspruch 12 oder 13, **dadurch gekennzeichnet, dass** der Wärmeübertrager eine elektrische Heizvorrichtung ist.

15. Wärmeübertrager nach Anspruch 14, **dadurch gekennzeichnet, dass** die elektrische Heizvorrichtung PTC-Heizelemente aufweist, wobei die Rippenelemente (1, 101, 201) und die PTC-Heizelemente benachbart zueinander angeordnet sind.
